# EUROPÄISCHE PATENTSCHRIFT

(11) **EP 1 871 616 B1**
(45) Veröffentlichungstag und Bekanntmachung des Hinweises auf die Patenterteilung: **02.01.2013**
(21) Anmeldenummer: 06724402.0
(22) Anmeldetag: 19.04.2006
(51) Int. Cl.: G06K 19/06, B42D 15/10

(54) **SICHERHEITSELEMENT MIT RÄUMLICH AUFGELÖSTER MAGNETISCHER CODIERUNG, VERFAHREN UND VORRICHTUNG ZU DESSEN HERSTELLUNG UND DESSEN VERWENDUNG**
SECURITY ELEMENT HAVING A SPATIALLY RESOLVED MAGNETIC CODING, METHOD AND DEVICE FOR PRODUCING THE SAME AND THE USE THEREOF
ELEMENT DE SECURITE PRESENTANT UN CODAGE MAGNETIQUE A RESOLUTION SPATIALE, PROCEDE ET DISPOSITIF DE PRODUCTION DE CET ELEMENT ET UTILISATION DUDIT ELEMENT

(30) Priorität: 20.04.2005 EP 05008596
(43) Veröffentlichungstag der Anmeldung: 02.01.2008
(73) Patentinhaber: Hueck Folien GmbH, 4342 Baumgartenberg (AT)
(72) Erfinder: ZOISTER, Stefan, A-4320 Perg (AT); MÜLLER, Matthias, 92699 Bechtsrieth (DE); BERGSMANN, Martin, A-4020 Linz (AT)
(74) Vertreter: Landgraf, Elvira
(86) Internationale Anmeldenummer: PCT/EP2006/003544
(87) Internationale Veröffentlichungsnummer: WO 2006/111358

(56) Entgegenhaltungen:
- EP-A- 0 310 707
- EP-A- 0 355 162
- WO-A-2004/091930
- GB-A- 1 392 038

## Beschreibung

Die Erfindung betrifft ein Sicherheitselement für Datenträger, Wertdokumente, Verpackungen und dergleichen, das eine räumlich aufgelöste magnetische Codierung aufweist.

Aus der EP 0 516 790 B1 ist ein Sicherheitsdokument mit einem Sicherheitselement in Form eines Fadens oder Bandes aus transparentem Kunststoffmaterial bekannt, das eine metallische Schicht mit Aussparungen in Form von Zeichen, Mustern oder dergleichen aufweist, wobei über oder unter dieser Metallschicht eine weitere magnetische Schicht derart angeordnet ist, dass wenigstens die lesbaren Aussparungen frei bleiben.

Aus der EP 0 310 707 B1 ist ein Dokument mit magnetisch detektierbaren Sicherheitsmerkmalen bekannt, die Bereiche mit variierbarer Magnetfeldstärke aufweisen.

WO 2004/091930 zeigt auch der Stand der Technik.

Bei diesen bekannten zweidimensionalen magnetischen Informationen, ist der Speicherplatz für Informationen durch die 2 dimensionale Orientierung jedoch beschränkt.

Aufgabe der vorliegenden Erfindung war es ein Sicherheitselement mit magnetischer Codierung bereitzustellen, bei dem eine definierte magnetische Codierung räumlich aufgelöst detektiert werden kann.

Gegenstand der Erfindung ist daher ein Sicherheitsmerkmal mit magnetischer Codierung, wobei auf einen oder mehreren flexibel miteinander verbundene Trägersubstraten magnetische Codierungen aufgebracht sind, dadurch gekennzeichnet das die magnetische Codierungen in zwei oder mehreren Schichten auf unterschiedlichen Seiten des Trägersubstrats gegebenenfalls gleichzeitig mit gegebenenfalls transparenten Aussparungen in Form von Mustern, Zeichen, Buchstaben, geometrischen Figuren, Linien, Guillochen und dergleichen aufgebracht sind, die räumlich aufgelöst werden können, wobei die jeweiligen magnetischen Schichten zumindest teilsweise überlappen.

Das erfindungsgemäße Sicherheitsmerkmal ist auf einfache Weise in der gewünschten Erscheinungsform und mit der gewünschten definierten magnetischen räumlich aufgelösten Codierung herstellbar und bietet einen erhöhten Schutz gegen Fälschungen und Nachahmungen. Das Sicherheitsmerkmal zeigt bei gleicher. Flächendichte eine höhere Speicherdichte.

Als Trägersubstrat für das erfindungsgemäße Sicherheitsmerkmal kommen beispielsweise Trägerfolien vorzugsweise flexible Kunststofffolien, beispielsweise aus PI, PP, MOPP, PE, PPS, PEEK, PEK, PEI, PSU, PAEK, LCP, PEN, PBT, PET, PA, PC, COC, POM, ABS, PVC in Frage. Die Trägerfolien weisen vorzugsweise eine Dicke von 5 - 700 µm, bevorzugt 5 - 200 µm, besonders bevorzugt 5 - 50 µm auf.

Ferner können als Trägersubstrat auch Metallfolien, beispielsweise Al-, Cu-, Sn-, Ni-, Fe- oder Edelstahlfolien mit einer Dicke von 5 - 200 µm, vorzugsweise 10 bis 80 µm, besonders bevorzugt 20 - 50 µm dienen. Die Folien können auch oberflächenbehandelt, beschichtet oder kaschiert beispielsweise mit Kunststoffen oder lackiert sein.

Ferner können als Trägersubstrate auch Papier oder Verbunde mit Papier, beispielsweise Verbunde mit Kunststoffen mit einem Flächengewicht von 20 - 500 g/m², vorzugsweise 40 - 200 g/m². verwendet werden.

Ferner können als Trägersubstrate Gewebe oder Vliese, wie Endlosfaservliese, Stapelfaservliese und dergleichen, die gegebenenfalls vemadelt oder kalandriert sein können, verwendet werden. Vorzugsweise bestehen solche Gewebe oder Vliese aus Kunststoffen, wie PP, PET, PA, PPS und dergleichen, es können aber auch Gewebe oder Vliese aus natürlichen, gegebenenfalls behandelten Fasern, wie Viskosefaservliese eingesetzt werden. Die eingesetzten Gewebe oder Vliese weisen ein Flächengewicht von etwa 20 g/m² bis 500 g/m² auf. Gegebenenfalls können diese Gewebe oder Vliese oberflächenbehandelt sein.

Das Trägersubstrat wird mit einer Farbe oder einem Lack mit magnetischen Eigenschaften bedruckt.

Geeignet zur Herstellung codierter magnetischer Merkmale sind Magnetfarben, die in der Lage sind, magnetische Felder mit hoher Flussdichte hervorzurufen oder Magnetfelder hoher Dichte zu leiten.

Besonders geeignet sind Magnetpigmentfarben mit Pigmenten auf Basis von Fe-oxiden, wie Fe₂O₃ oder Fe₃O₄, Eisen, Nickel, Cobalt und deren Legierungen, Cobalt/Samarium, Barium oder Cobalt-ferrite, hart- und weich magnetische Eisen- und Stahlsorten in wässrigen bzw. lösungsmittelhaltigen Dispersionen. Als Lösungsmittel kommen beispielsweise i-Propanol, Ethylacetat, Methylethylketon, Methoxypropanol, Aliphate oder Aromate und deren Mischungen in Frage.

Vorzugsweise sind die Pigmente in Acrylat- Polymerdispersionen mit einem Molekulargewicht von 150.000 bis 300.000, in Acrylat-Urethan-Dispersionen, Acrylat- Styrol oder PVC-haltigen Dispersionen oder in lösemittelhaltige Systeme mit gleicher Bindemittelbasis eingebracht.

Insbesondere geeignet sind Magnetfarben mit Pigmenten auf Basis von Cr/Ni-Stahl, Al/Fe₃O₄ und dergleichen. Diese Magnetfarben zeigen im Gegensatz zu den konventionellen Magnetfarben, die schwarz, braun oder grau erscheinen, ein silbriges Erscheinungsbild und weisen gleichzeitig die oben beschriebenen erforderlichen magnetischen Eigenschaften auf. Dadurch ist es möglich, das für viele Anwendungen erwünschte bzw. erforderliche metallisch glänzende Erscheinungsbild in einem Arbeitsgang bereits durch Verdrucken dieser Magnetfarben zu erzeugen. Ein Überdrucken bzw. Beschichten mit metallischen oder Metall-Schichten zur Erzeugung des gewünschten Erscheinungsbildes ist daher nicht nötig, kann aber beispielsweise zur Einbringung weiterer Identifikationsmerkmale problemlos erfolgen.

Das Bedrucken erfolgt vorzugsweise mit Hilfe eines laserbelichteten Zylinders oder einer Druckplatte vorzugsweise im Tiefdruckverfahren, wobei das Druckwerkzeug (Zylinder oder Druckplatte) so ausgestaltet ist, dass die codierte magnetische Schicht gegebenenfalls gleichzeitig mit den abzubildenden Zeichen, Mustern, Buchstaben, geometrischen Figuren, Linien, Guillochen und dergleichen gedruckt werden kann.

Es sind aber auch alle anderen Beschichtungsverfahren, beispielsweise

Die magnetische Druckfarbe wird in unterschiedlicher Dicke und Form entsprechend der Oberfläche des Druckwerkzeugs in einem Arbeitsschritt auf das Trägersubstrat aufgebracht.

Anschließend kann auf dieses beschichtete Trägersubtrat ein weiteres Trägersubstrat mit einer magnetischen Codierung aufgebracht, wobei die magnetische Codierung gleich oder unterschiedlich sein kann.

Die beiden Trägersubstrate mit den jeweiligen codierten magnetischen Schichten können auf bekannte Weise durch Kaschieren, mittels Heiß- oder Kaltsiegelklebern und dergleichen miteinander verbunden werden.

Ferner können die codierten magnetischen Schichten auf beiden Seiten eines einzigen Trägersubstrats aufgebracht sein.

Dadurch wird eine räumlich auflösbare codierte Struktur erzeugt, die maschinell ausgelesen werden kann.

Dabei sind einerseits die magnetischen Charakteristika der beiden partiellen magnetischen Schichten detektierbar, sondern auch die magnetischen Eigenschaften der beiden magnetischen Schichten gemeinsam. Zur Codierung in den beiden Dimensionen in der Fadenebene, kommt also eine weitere Codierung normal zur Fadenebene dazu.

Dadurch kann die Speicherkapazität pro Fadenfläche erhöht werden.

Die jeweiligen Trägersubstrate können bereits funktionelle oder dekorative Schichten aufweisen, oder es können jeweils nach Aufbringen der magnetisch codierten Schicht weitere Schichten aufgebracht werden.

Die Trägersubstrate können aber auch bereits zusätzlich eine Lack- oder Farbschicht aufweisen, die unstrukturiert oder strukturiert, beispielsweise geprägt sein kann. Die Lackschicht kann beispielsweise eine releasefähige Transferlackschicht sein, sie kann durch Strahlung, beispielsweise UV-Strahlung vernetzt oder vernetzbar sein und kratzfest und/oder antistatisch ausgerüstet sein. Geeignet sind sowohl wässrige als auch feste Lacksysteme, insbesondere auch Lacksysteme auf Basis Polyester-Acrylat oder Epoxyacrylat Kolophonium-, Acrylat-, Alkyd-, Melamin-, PVA-, PVC-, Isocyanat-, Urethansysteme, die konventionell oder reaktiv härtend Gemisch oder strahlungshärtend) sein können.

Als Farb- bzw. Lackschichten können jeweils verschiedenste Zusammensetzungen verwendet werden. Die Zusammensetzung der einzelnen Schichten kann insbesondere nach deren Aufgabe variieren, also ob die einzelnen Schichten ausschließlich Dekorationszwecken dienen oder eine funktionelle Schicht sein sollen oder ob die Schicht sowohl eine Dekorationsals auch eine funktionelle Schicht sein soll.

Diese Schichten können pigmentiert oder nicht pigmentiert sein. Als Pigmente können alle bekannten Pigmente, wie beispielsweise Titandioxid, Zinksulfid, Kaolin, ITO, ATO, FTO, Aluminium, Chrom- und Siliciumoxide als auch farbige Pigmente verwendet werden. Dabei sind lösungsmittelhaltige Lacksysteme als auch System ohne Lösungsmittel verwendbar.

Als Bindemittel kommen verschiedene natürliche oder synthetische Bindemittel in Frage.

Diese weiteren bereits auf dem Trägersubstrat vorhandenen oder im Anschluss aufgebrachten funktionellen Schichten beispielsweise können bestimmte chemische, physikalische und auch optische Eigenschaften aufweisen.

Die optischen Eigenschaften einer weiteren Schicht lassen sich durch sichtbare Farbstoffe bzw. Pigmente, lumineszierende Farbstoffe bzw. Pigmente, die im sichtbaren, im UV-Bereich oder im IR-Bereich fluoreszieren bzw. phosphoreszieren, Effektpigmente, wie Flüssigkristalle, Perlglanz, Bronzen und/oder Multilayer-Farbumschlagpigmente und wärmeempfindliche Farben bzw. Pigmente beeinflussen. Diese sind in allen möglichen Kombinationen einsetzbar. Zusätzlich können auch phosphoreszierende Pigmente allein oder in Kombination mit anderen Farbstoffen und/oder Pigmenten eingesetzt werden.

Ferner können auch elektrisch leitfähige Schichten auf dem Substrat vorhanden sein, oder anschließend aufgebracht werden, beispielsweise elektrisch leitfähige polymere Schichten oder leitfähige Farb- oder Lackschichten.

Zur Einstellung der elektrischen Eigenschaften können der aufzubringenden Farbe bzw. dem aufzubringenden Lack, beispielsweise Graphit, Ruß, leitfähige organische oder anorganische Polymere, Metallpigmente (beispielsweise Kupfer, Aluminium, Silber, Gold, Eisen, Chrom und dergleichen), Metalllegierungen wie Kupfer-Zink oder Kupfer-Aluminium oder auch amorphe oder kristalline keramische Pigmente wie ITO, ATO, FTO und dergleichen zugegeben werden. Weiters können auch dotierte oder nicht dotierte Halbleiter wie beispielsweise Silicium, Germanium oder dotierte oder nicht dotierte polymere Halbleiter oder Ionenleiter wie amorphe oder kristalline Metalloxide oder Metallsulfide als Zusatz verwendet werden. Ferner können zur Einstellung der elektrischen Eigenschaften der Schicht polare oder teilweise polare Verbindungen wie Tenside, oder unpolare Verbindungen wie Silikonadditive oder hygroskopische oder nicht hygroskopische Salze verwendet oder dem Lack zugesetzt werden.

Als Schicht mit elektrischen Eigenschaften kann auch eine vollflächige oder partielle Metallschicht aufgebracht werden, wobei die partielle Aufbringung mittels eines Ätzverfahrens (Aufbringung einer vollflächigen Metallschicht und anschließende partielle Entfernung durch Ätzen) oder mittels eines Demetallisierungsverfahrens erfolgen kann.

Bei Verwendung eines Demetallisierungsverfahrens wird in einem ersten Schritt vorzugsweise eine in einem Lösungsmittel lösliche Farbe (gegebenenfalls in Form einer inversen Codierung) aufgebracht, anschließend wird, gegebenenfalls nach Aktivierung des Trägersubstrats durch eine Plasma- oder Coronabehandlung, die metallische Schicht aufgebracht, worauf die lösliche Farbschicht durch Behandlung mit einem geeigneten Lösungsmittel samt der in diesen Bereichen vorhandenen Metallisierung abgelöst wird.

Ferner kann als elektrisch leitfähige Schicht auch eine elektrisch leitfähige Polymerschicht aufgebracht werden. Die elektrisch leitfähigen Polymeren können beispielsweise Polyanilin oder Polyethylendioxythiophen sein.

Es ist auch möglich der verwendeten Magnetfarbe, beispielsweise Ruß oder Graphit zuzusetzen, wodurch eine gleichzeitig magnetische als auch elektrisch leitfähige Schicht in definierter Codierung nach dem erfindungsgemäßen Verfahren besonders vorteilhaft herstellbar ist.

Ferner kommen als zusätzliche Sicherheitsmerkmale auch weitere Oberflächenreliefstrukturen, beispielsweise Beugungsgitter, Hologramme und dergleichen in Frage, wobei diese Strukturen gegebenenfalls auch metallisiert oder partiell metallisiert sein können.

Zur Herstellung derartiger Oberflächenstrukturen wird vorerst UV-härtbarer tiefziehfähiger Lack aufgebracht. Anschließend kann beispielsweise eine Oberflächenstruktur durch Abformen einer Matrize in diesen Lack, der zum Zeitpunkt der Abformung bis zum Gelpunkt vorgehärtet ist, hergestellt, worauf anschließend der strahlungshärtbare Lack nach Aufbringung der Oberflächenstruktur vollständig ausgehärtet wird.

Durch die Verwendung des UV-härtbaren Lacks sind nach der Aushärtung darauf aufgebrachte Schichten, auch eine gegebenenfalls eingebrachte Oberflächenstruktur, auch unter Temperaturbelastung stabil.

Der strahlungshärtbare Lack kann beispielsweise ein strahlungshärtbares Lacksystem auf Basis eines Polyester-, eines Epoxy oder Polyurethansystems das 2 oder mehr verschiedene, dem Fachmann geläufige Photoinitiatoren enthält, die bei unterschiedlichen Wellenlängen eine Härtung des Lacksystems in unterschiedlichem Ausmaß initiieren können. So kann beispielsweise ein Photoinitiator bei einer Wellenlänge von 200 bis 400 nm aktivierbar sein, der zweite Photoinitiator dann bei einer Wellenlänge von 370 bis 600 nm. Zwischen den Aktivierungswellenlängen der beiden Photoinitiatoren sollte genügend Differenz eingehalten werden, damit nicht eine zu starke Anregung des zweiten Photointiators erfolgt, während der erste aktiviert wird. Der Bereich, in dem der zweite Photoinitiator angeregt wird, sollte im Transmissionswellenlängenbereich des verwendeten Trägersubstrats liegen. Für die Haupthärtung (Aktivierung des zweiten Photoinitiators) kann auch Elektronenstrahlung verwendet werden.

Als strahlungshärtbarer Lack kann auch ein wasserverdünnbarer Lack verwendet werden. Bevorzugt werden Lacksysteme auf Polyesterbasis.

Ferner können die erfindungsmäßigen Sicherheitselemente mit einer Schutzlackschicht ein- oder beidseitig versehen sein. Der Schutzlack kann pigmentiert oder nicht pigmentiert sein, wobei als Pigmente alle bekannte Pigmente oder Farbstoffe, beispielsweise TiO₂, ZnS, Kaolin, ATO, FTO, Aluminium, Chrom- und Siliziumoxide oder beispielsweise organische Pigmente wie Pthalocyaninblau, 1-Indolidgelb, Dioxazinviolett und dergleichen verwendet werden können. Ferner können lumineszierende Farbstoffe bzw. Pigmente, die im sichtbaren, im UV-Bereich oder im IR-Bereich fluoreszieren bzw. phosphoreszieren, Effektpigmente wie Flüssigkeitskristalle, Perlglanz, Bronzen und/oder Multilayer-Farbumschlagpigmente und wärmeempfindliche Farben bzw. Pigmente zugegeben werden. Diese sind in allen möglichen Kombinationen einsetzbar. Zusätzlich können auch phosphoreszierende Pigmente allein oder in Kombination mit anderen Farbstoffen und/oder Pigmenten eingesetzt werden.

Der Aufbau kann zum Schutz der codierten magnetischen Schichten anschließend mit einem weiteren Trägersubstrat kaschiert werden bzw. mit einer Schutzschicht in Form eines bekannten Schutzlacks oder eines thermoplastischen oder strahlungshärtbaren Prägelacks versehen werden.

Ferner kann das erfindungsgemäße Sicherheitselement mit einem Heiß- oder Kaltsiegelkleber oder einer Selbstklebebeschichtung zur Aufbringung auf das zu schützende Wertdokument oder eine Verpackung versehen sein.

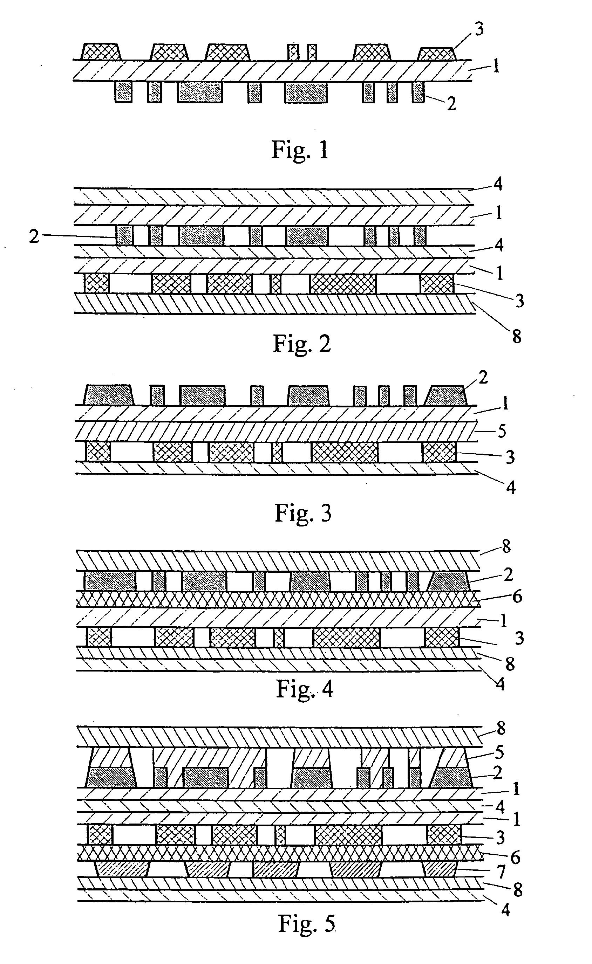

In den Figuren 1 bis 5 sind erfindungsgemäße Ausführungsformen dargestellt. Darin bedeuten 1 ein Trägersubstrat, 2 die erste partielle magnetische Schicht, 3 die zweite partielle magnetische Schicht, 4 eine Haftvermittlerschicht, beispielsweise eine Kaschierkleberschicht, eine Heiß- oder Kaltsiegelkleberschicht, 5, 6 und 7 weitere funktionelle Schichten, 8 eine Schutzlackschicht.

Die erfindungsgemäßen Sicherheitselemente werden gegebenenfalls nach entsprechender Konfektionierung (beispielsweise zu Fäden, Bändern, Streifen, Patches oder anderen Formaten) daher als Sicherheitsmerkmale in Datenträgern, insbesondere Wertdokumenten wie Ausweisen, Karten, Banknoten oder Etiketten, Siegeln und dergleichen, aber auch in Verpackungsmaterialien für sensible Güter, wie Pharmazeutika, Lebensmittel, Kosmetika, Datenträger, elektronische Bauteile und dergleichen verwendet. Ferner können die Sicherheitselemente auf Verpackungsmaterialien für unterschiedlichste Güter, beispielsweise auf Folien, Papier, Schachteln, Kartons und dergleichen appliziert werden.

## Patentansprüche

1. Sicherheitsmerkmal mit magnetischer Codierung, wobei auf einem oder mehreren flexibel miteinander verbundenen Trägersubstraten (1) magnetische Codierungen aufgebracht sind, **dadurch gekennzeichnet, dass** die magnetischen Codierungen in zwei oder mehreren partiellen Schichten (2, 3) auf unterschiedlichen Seiten des Trägersubstrat (1) gegebenenfalls gleichzeitig mit gegebenenfalls transparenten Aussparungen in Form von Mustern, Zeichen, Buchstaben, geometrischen Figuren, Linien, Guillochen und dergleichen aufgebracht sind, die räumlich aufgelöst werden können, wobei die jeweiligen magnetischen Schichten teilweise überlappen.

2. Sicherheitsmerkmal nach Anspruch 1, **dadurch gekennzeichnet, dass** das Trägersubstrat (1) zusätzlich weitere funktionelle und/oder dekorative Schichten aufweist (5, 6, 7).

3. Sicherheitsmerkmal nach Anspruch 2, **dadurch gekennzeichnet, dass** das Trägersubstrar (1) zusätzlich elektrisch leitfähige und/oder optisch wirksame und/oder farbgebende Schichten (5, 6, 7) aufweist.

4. Sicherheitsmerkmal nach einem der Ansprüche 2 bis 4, **dadurch gekennzeichnet, dass** die Schlichten (5, 6, 7) vollflächig oder partiell auf dem Trägersubstrat vorhanden sind.

5. Sicherheitsmerkmal nach einem der Ansprüche 1 bis 5, **dadurch gekennzeichnet, dass** das Sicherheitselement ein- oder beidseitig mit einer Schutzlackschicht (8) versehen ist.

6. Sicherheitselemente nach Anspruch 5, **dadurch gekennzeichnet, dass** die Schutzlackschicht (8) pigmentiert ist.

7. Sicherheitselement nach einem der Ansprüche 1 - 6, **dadurch gekennzeichnet, dass** das Sicherheitselement mit einem Trägersubstrat (1) kaschiert ist.

8. Sicherheitselement nach Anspruch 7, **dadurch gekennzeichnet, dass** der Kaschierkleber (4) pigmentiert ist.

9. Sicherheitselemente nach einem der Ansprüche 1 bis 8 **dadurch gekennzeichnet, dass** das Sicherheitselement ein- oder beidseitig mit einem Heiß- oder Kaltsiegelkleber oder einer selbstklebenden Beschichtung versehen ist.

10. Sicherheitselemente nach Anspruch 9, **dadurch gekennzeichnet, dass** der Heiß- oder Kaltsiegelkleber bzw. die selbstklebende Beschichtung vollflächig oder partiell oder strukturiert aufgebracht ist.

11. Sicherheitselemente nach Anspruch 10, **dadurch gekennzeichnet, dass** der Heiß- oder Kaltsiegelkleber bzw. die selbstklebende Beschichtung pigmentiert ist.

12. Folienmaterial mit magnetischer Codierung, **dadurch gekennzeichnet, dass** auf ein oder mehrere flexiblen miteinander verbundene Trägersubstrat (1) magnetische Codierungen in zwei oder mehreren partiellen Schichten (2, 3) gegebenenfalls gleichzeitig mit gegebenenfalls transparenten Aussparungen in Form von Mustern, Zeichen, Buchstaben, geometrischen Figuren, Linien, Guillochen und dergleichen erzeugt wird, die räumlich aufgelöst werden kann, aufgebracht sind.

13. Folienmaterial nach Anspruch 12, **dadurch gekennzeichnet, dass** das/die Trägersubstrate (1) zusätzlich weitere funktionelle und/oder dekorative Schichten (5, 6, 7) aufweisen.

14. Folienmaterial nach Anspruch 13, **dadurch gekennzeichnet, dass** das(die Trägersubstrate (1) zusätzlich elektrisch leitfähige und/oder optisch wirksame und/oder farbgebende Schichten (5, 6, 7) aufweist(en).

15. Folienmaterial nach einem der Ansprüche 13 bis 14, **dadurch gekennzeichnet, dass** die Schichten (5, 6, 7) vollflächig oder partiell auf dem Trägersubstrat (1) vorhanden sind.

16. Folienmaterial nach einem der Ansprüche 11 bis 15, **dadurch gekennzeichnet, dass** das Sicherheitselement ein- oder beidseitig mit einer Schutzlackschicht (8) versehen ist.

17. Folienmaterial nach Anspruch 16, **dadurch gekennzeichnet, dass** die Schutzlackschicht (8) pigmentiert ist.

18. Folienmaterial nach einem der Ansprüche 12 - 17, **dadurch gekennzeichnet, dass** das Sicherheitselement mit einem oder mehreren Trägersubstrat(en) (1), das/die gegebenenfalls funktionelle und/oder dekorative Schichten (5, 6, 7) aufweist/aufweisen, kaschiert ist.

19. Folienmaterial nach Anspruch 18, **dadurch gekennzeichnet, dass** der Kaschierkleber (4) pigmentiert ist.

20. Folienmaterial nach einem der Ansprüche 11 bis 19, **dadurch gekennzeichnet, dass** das Sicherheitselement ein- oder beidseitig mit einem Heiß- oder Kaltsiegelkleber oder einer selbstklebenden Beschichtung versehen ist.

21. Folienmaterial nach Anspruch 20, **dadurch gekennzeichnet, dass** der Heiß- oder Kaltsiegelkleber bzw. die selbstklebende Beschichtung vollflächig oder partiell oder strukturiert aufgebracht ist.

22. Folienmaterial nach Anspruch 21, **dadurch gekennzeichnet, dass** der Heiß- oder Kaltsiegelkleber bzw. die selbstklebende Beschichtung pigmentiert ist.

23. Verwendung der Sicherheitselemente nach einem der Ansprüche 1 bis 11 ggf. nach Konfektionierung als Sicherheitsmerkmale in Datenträgern, insbesondere Wertdokumenten wie Ausweisen, Karten, Banknoten oder Etiketten, Siegeln auf oder als Verpackungsmaterial beispielsweise in der pharmazeutischen, Elektronik- und/oder Lebensmittelindustrie, beispielsweise in Form Blisterfolien, Faltschachteln, Abdeckungen, Folienverpackungen.

24. Verwendung des Folienmaterials nach einem der Ansprüche 12 bis 22 ggf. nach Konfektionierung als Sicherheitselemente in Datenträgern, insbesondere Wertdokumenten wie Ausweisen, Karten, Banknoten oder Etiketten, Siegeln auf oder als Verpackungsmaterial beispielsweise in der pharmazeutischen, Elektronik- und/oder Lebensmittelindustrie, beispielsweise in Form Blisterfolien, Faltschachteln, Abdeckungen, Foiienverpackungen.

25. Wertdokumente, die ein Sicherheitsmerkmal nach einem der Ansprüche 1 bis 11 aufweisen.

26. Wertpapiere, die zumindest ein Sicherheitsmerkmal nach einem der Ansprüche 1 bis 11, vollflächig oder partiell in Form eines Fadens, eines Fensterfadens oder eines Patches eingebettet oder zumindest teilweise an einer oder beiden Oberflächen appliziert, aufweisen.

27. Verpackungen, die ein Sicherheitsmerkmal nach einem der Ansprüche 1 bis 11 aufweisen.

## Claims

1. Security feature with magnetic coding, wherein magnetic codings are applied to one or more carrier substrates (1) which are flexibly connected to one another, **characterized in that** the magnetic codings are applied in two or more partial layers (2, 3) on different sides of the carrier substrate (1), if appropriate at the same time with gaps, which are transparent if appropriate, in the form of patterns, characters, letters, geometric shapes, lines, guilloches and the like, which can be spatially resolved, wherein the respective magnetic layers partially overlap.

2. Security feature according to Claim 1, **characterized in that** the carrier substrate (1) additionally has further functional and/or decorative layers (5, 6, 7).

3. Security feature according to Claim 2, **characterized in that** the carrier substrate (1) additionally has electrically conductive and/or optically active and/or colouring layers (5, 6, 7).

4. Security feature according to one of Claims 2 to 3, **characterized in that** the layers (5, 6, 7) are present on the carrier substrate in a full-area or partial form.

5. Security feature according to one of Claims 1 to 4, **characterized in that** the security element is provided on one or both sides with a protective varnish layer (8).

6. Security elements according to Claim 5, **characterized in that** the protective varnish layer (8) is pigmented.

7. Security element according to one of Claims 1-6, **characterized in that** the security element is laminated with a carrier substrate (1).

8. Security element according to Claim 7, **characterized in that** the laminating adhesive (4) is pigmented.

9. Security elements according to one of Claims 1 to 8, **characterized in that** the security element is provided on one or both sides with a hot-melt or cold-seal adhesive or a self-adhesive coating.

10. Security elements according to Claim 9, **characterized in that** the hot-melt or cold-seal adhesive or the self-adhesive coating is applied in a full-area or partial or structured form.

11. Security elements according to Claim 10, **characterized in that** the hot-melt or cold-seal adhesive or the self-adhesive coating is pigmented.

12. Film material with magnetic coding, **characterized in that** magnetic codings in two or more partial layers (2, 3) are applied, if appropriate at the same time with gaps, which are transparent if appropriate, in the form of patterns, characters, letters, geometric shapes, lines, guilloches and the like, which can be spatially resolved, on one or more flexible carrier substrates (1) which are connected to one another.

13. Film material according to Claim 12, **characterized in that** the carrier substrate/carrier substrates (1) additionally have further functional and/or decorative layers (5, 6, 7).

14. Film material according to Claim 13, **characterized in that** the carrier substrate/carrier substrates (1) additionally has/have electrically conductive and/or optically active and/or colouring layers (5, 6, 7).

15. Film material according to one of Claims 13 to 14, **characterized in that** the layers (5, 6, 7) are present on the carrier substrate (1) in a full-area or partial form.

16. Film material according to one of Claims 11 to 15, **characterized in that** the security element is provided on one or both sides with a protective varnish layer (8).

17. Film material according to Claim 16, **characterized in that** the protective varnish layer (8) is pigmented.

18. Film material according to one of Claims 12-17, **characterized in that** the security element is laminated with one or more carrier substrates (1), which has/have if appropriate functional and/or decorative layers (5, 6, 7).

19. Film material according to Claim 18, **characterized in that** the laminating adhesive (4) is pigmented.

20. Film material according to one of Claims 11 to 19, **characterized in that** the security element is provided on one or both sides with a hot-melt or cold-seal adhesive or a self-adhesive coating.

21. Film material according to Claim 20, **characterized in that** the hot-melt or cold-seal adhesive or the self-adhesive coating is applied in a full-area or partial or structured form.

22. Film material according to Claim 21, **characterized in that** the hot-melt or cold-seal adhesive or the self-adhesive coating is pigmented.

23. Use of the security elements according to one of Claims 1 to 11 if appropriate after finishing as security features in data carriers, in particular valuable documents such as identity cards, cards, banknotes or labels, seals on or as packaging material for example in the pharmaceutical, electronics and/or food industries, for example in the form of blister films, folding boxes, covers, film packagings.

24. Use of the film material according to one of Claims 12 to 22 if appropriate after finishing as security elements in data carriers, in particular valuable documents such as identity cards, cards, banknotes or labels, seals on or as packaging material for example in the pharmaceutical, electronics and/or food industries, for example in the form of blister films, folding boxes, covers, film packagings.

25. Valuable documents, having a security feature according to one of Claims 1 to 11.

26. Valuable papers, which have at least one security feature according to one of Claims 1 to 11, embedded over a full area or partially in the form of a thread, of a window thread or a patch, or at least partially applied on one or both surfaces.

27. Packagings, having a security feature according to one of Claims 1 to 11.

## Revendications

1. Caractéristique de sécurité comportant un codage magnétique, sachant que des codages magnétiques sont appliqués sur un ou plusieurs substrats porteurs (1) reliés entre eux de manière flexible, **caractérisée en ce que** les codages magnétiques sont appliqués en deux ou plusieurs couches (2, 3) partielles sur divers côtés du substrat porteur (1), éventuellement en même temps avec éventuellement des évidements transparents sous la forme de modèles, signes, lettres, figures géométriques, lignes, guillochis ou similaires, lesquels peuvent présenter une éventuelle résolution spatiale, sachant que les couches magnétiques respectives se chevauchent partiellement.

2. Caractéristique de sécurité selon la revendication 1, **caractérisée en ce que** le substrat porteur (1) présente en outre d'autres couches fonctionnelles et/ou décoratives (5, 6, 7).

3. Caractéristique de sécurité selon la revendication 2, **caractérisée en ce que** le substrat porteur (1) présente en outre des couches électriquement conductrices et/ou à effet optique et/ou colorantes (5, 6, 7).

4. Caractéristique de sécurité selon l'une quelconque des revendications 2 à 4, **caractérisée en ce que** les couches (5, 6, 7) sont présentes sur toute la surface ou en partie sur le substrat porteur.

5. Caractéristique de sécurité selon l'une quelconque des revendications 1 à 5, **caractérisée en ce que** l'élément de sécurité est pourvu d'un côté ou des deux côtés d'une couche de vernis de protection (8).

6. Eléments de sécurité selon la revendication 5, **caractérisés en ce que** la couche de vernis de protection (8) est pigmentée.

7. Elément de sécurité selon l'une quelconque des revendications 1 à 6, **caractérisé en ce que** l'élément de sécurité est stratifié avec un substrat porteur (1).

8. Elément de sécurité selon la revendication 7, **caractérisé en ce que** la colle de stratification (4) est pigmentée.

9. Eléments de sécurité selon l'une quelconque des revendications 1 à 8, **caractérisés en ce que** l'élément de sécurité est pourvu d'un côté ou des deux côtés d'une colle à sceller à chaud ou à froid ou d'un revêtement autocollant.

10. Eléments de sécurité selon la revendication 9, **caractérisés en ce que** la colle à sceller à chaud ou à froid ou le revêtement autocollant sont appliqués sur toute la surface ou de manière partielle ou de manière structurée.

11. Eléments de sécurité selon la revendication 10, **caractérisés en ce que** la colle à sceller à chaud ou à froid ou le revêtement autocollant sont pigmentés.

12. Matériau en film comportant un codage magnétique, **caractérisé en ce que** des codages magnétiques sont appliqués en deux ou plusieurs couches (2, 3) partielles éventuellement en même temps avec éventuellement des évidements transparents sous la forme de motifs, de signes, de lettres, de figures géométriques, de lignes, de guillochis et similaires pouvant présenter une résolution spatiale sur un ou plusieurs substrats porteurs (1) reliés les uns aux autres de manière flexible.

13. Matériau en film selon la revendication 12, **caractérisé en ce que** le/les substrats porteurs (1) présente(nt) en outre d'autres couches fonctionnelles et/ou décoratives (5, 6, 7).

14. Matériau en film selon la revendication 13, **caractérisé en ce que** le/les substrats porteurs (1) présente(nt) en outre des couches électriquement conductrices et/ou à effet optique et/ou colorantes (5, 6, 7).

15. Matériau en film selon l'une quelconque des revendications 13 et 14, **caractérisé en ce que** les couches (5, 6, 7) sont présentes sur toutes la surface ou de manière partielle sur le substrat porteur (1).

16. Matériau en film selon l'une quelconque des revendications 11 à 15, **caractérisé en ce que** l'élément de sécurité est pourvu d'un côté ou des deux côtés d'une couche de vernis de protection (8).

17. Matériau en film selon la revendication 16, **caractérisé en ce que** la couche de vernis de protection (8) est pigmentée.

18. Matériau en film selon l'une quelconque des revendications 12 à 17, **caractérisé en ce que** l'élément de sécurité est stratifié avec un ou plusieurs substrats porteurs (1), lequel/lesquels présente(nt) éventuellement des couches fonctionnelles et/ou décoratives (5, 6, 7).

19. Matériau en film selon la revendication 18, **caractérisé en ce que** la colle de stratification (4) est pigmentée.

20. Matériau en film selon l'une quelconque des revendications 11 à 19, **caractérisé en ce que** l'élément de sécurité est pourvu d'un côté ou des deux côtés d'une colle à sceller à chaud ou à froid ou d'un revêtement autocollant.

21. Matériau en film selon la revendication 20, **caractérisé en ce que** la colle à sceller à chaud ou à froid ou le revêtement autocollant sont appliqués sur toute la surface ou de manière partielle ou de manière structurée.

22. Matériau en film selon la revendication 21, **caractérisé en ce que** la colle à sceller à chaud ou à froid ou le revêtement autocollant sont pigmentés.

23. Utilisation des éléments de sécurité selon l'une quelconque des revendications 1 à 11 ou éventuellement selon la confection des caractéristiques de sécurité dans les supports de données, en particulier des documents de valeur tels que des passeports, des cartes, des billets de banque ou des étiquettes, sceaux sur ou en tant que matériau d'emballage par exemple dans les industries pharmaceutique, électronique et/ou alimentaire, par exemple sous la forme de films blister, de boîtes pliantes, de recouvrements, d'emballages sous film.

24. Utilisation du matériau en film selon l'une quelconque des revendications 12 à 22 ou éventuellement selon la confection en tant qu'éléments de sécurité dans des supports de données, en particulier des documents de valeur tels que des passeports, des cartes, des billets de banque ou des étiquettes, des sceaux sur ou an tant que matériau d'emballage par exemple dans les industries pharmaceutique, électronique et/ou alimentaire, par exemple sous la forme de films blister, de boîtes pliantes, de recouvrements, d'emballages sous film.

25. Documents de valeur, qui présentent une caractéristique de sécurité selon l'une quelconque des revendications 1 à 11.

26. Papiers de valeur, qui présentent au moins une caractéristique de sécurité selon l'une quelconque des revendications 1 à 11, intégrée sur toute la surface ou de manière partielle sous la forme d'un fil, d'un fil de fenêtre ou d'un patch ou appliquée au moins en partie sur une ou deux surfaces.

27. Emballages, qui présentent une caractéristique de sécurité selon l'une quelconque des revendications 1 à 11.
